(19) Europäisches Patentamt
European Patent Office
Office européen des brevets

(11) EP 0 689 986 B1

(12) **EUROPEAN PATENT SPECIFICATION**

(45) Date of publication and mention
of the grant of the patent:
**12.03.1997 Bulletin 1997/11**

(51) Int. Cl.⁶: **B62D 6/08**, H02P 5/00
// B62D153:00

(21) Application number: **94113609.5**

(22) Date of filing: **31.08.1994**

(54) **Control device of power steering motor capable of preventing motor-current-induced vibration and noise**

Steuergerät für den Motor einer Servolenkung mit einer Möglichkeit zur Verhinderung von durch den Motorstrom erzeugten Vibrationen und Geräuschen

Dispositif de commande d'un moteur de direction assistée capable d'éliminer des vibrationes et de bruit générés par le courant du moteur

(84) Designated Contracting States:
**DE FR GB**

(30) Priority: **30.06.1994 JP 149751/94**

(43) Date of publication of application:
**03.01.1996 Bulletin 1996/01**

(73) Proprietor: **MITSUBISHI DENKI KABUSHIKI KAISHA**
**Tokyo (JP)**

(72) Inventors:
• **Kifuku, Takayuki,**
**c/o Mitsubishi Denki K.K.**
**Himeji-shi, Hyogo (JP)**
• **Kuroda, Hirofumi,**
**c/o Mitsubishi Denki K.K.**
**Himeji-shi, Hyogo (JP)**

(74) Representative: **Ritter und Edler von Fischern, Bernhard, Dipl.-Ing. et al**
**Hoffmann, Eitle & Partner,**
**Patentanwälte,**
**Arabellastrasse 4**
**81925 München (DE)**

(56) References cited:
**US-A- 5 153 492**

• **PATENT ABSTRACTS OF JAPAN vol. 013 no. 287 (M-844) ,30 June 1989 & JP-A-01 078975 (KOYO SEIKO CO LTD) 24 March 1989,**
• **PATENT ABSTRACTS OF JAPAN vol. 017 no. 668 (E-1473) ,9 December 1993 & JP-A-05 219769 (OMRON CORP) 27 August 1993,**

EP 0 689 986 B1

# Description

## BACKGROUND OF THE INVENTION

The present invention relates to a device for controlling a motor used in an electromotive power steering device.

Conventional power steering devices using a motor suffer from vibration and noise sound caused by a ripple on a motor current. Generation of such vibration is a particularly important issue in a power steering device. That is, such vibration is transmitted to a steering wheel and makes a driver uncomfortable. In the worst case, it may cause an erroneous steering operation, which might result in a traffic accident.

For example, Japanese Patent Application Unexamined Publication No. Sho. 64-78975 discloses a control device for solving the above problem. This control device employs what is called current feedback control in which a target current and a current flowing through a motor are compared with each other to determine an error, and control is so made as to reduce the error to 0. That is, the control device is adapted to eliminate high-frequency components that are a cause of a ripple on the motor current.

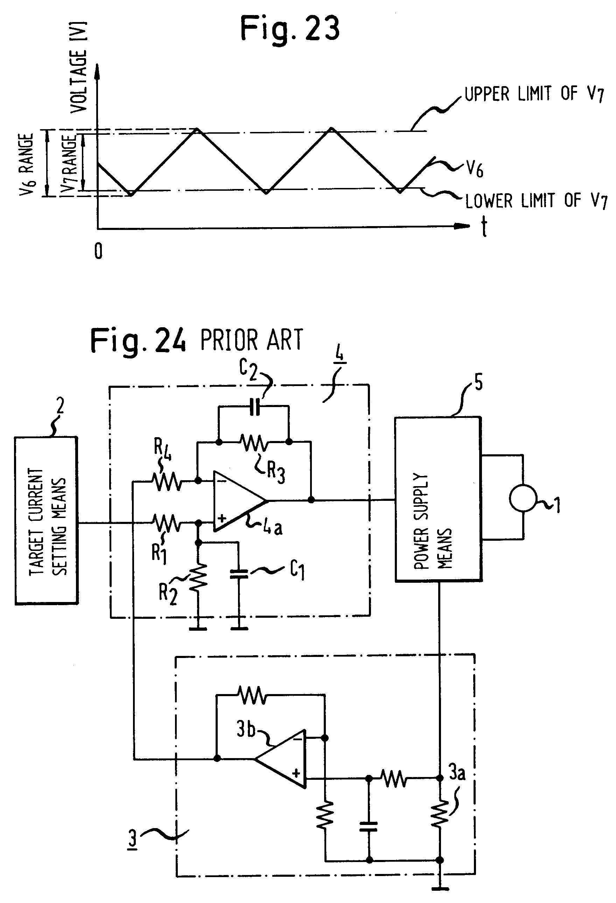

Fig. 24 shows the control device disclosed in the above publication. In Fig. 24, a motor 1 assists a steering operation. A target current setting means 2 for setting a target current that is to flow through the motor 1 receives a digital signal indicating a target current value as calculated by a computer (not shown), and outputs an analog signal obtained by converting the digital signal. A current detecting means 3 for detecting a motor current flowing through the motor 1 includes a current detecting resistor 3a for detecting the motor current and an operational amplifier 3b for amplifying a signal obtained by the resistor 3a. Receiving outputs of the target current setting means 2 and the current detecting means 3, an error amplifying means 4 amplifies an error between those outputs. A power supply means 5 receives an output of the error amplifying means 4, and supplies the motor 1 with power that corresponds to the received signal.

The above control device operates as follows. While a signal as output from the target current setting means 2 is DC-divided by resistors R1 and R2, high-frequency components included in the signal are eliminated by a capacitor C1. The signal thus processed is input to the positive input terminal of an operational amplifier 4.

On the other hand, a current flowing through the motor 1 is detected by the current detecting resistor 3a, and amplified by the operational amplifier 3b. The signal thus processed is input to the negative input terminal of the operational amplifier 4a through a resistor R4.

The operational amplifier 4a amplifies an error between the signals input to the positive and negative input terminals, and provides an amplified error signal to the power supply means 5. The DC gain (amplification factor) of the operational amplifier 4a is limited by resistors R3 and R4, and its bandwidth, which is closely related to the response speed of the control device, is limited by a capacitor C2.

Based on the amplified error signal that is sent from the operational amplifier 4a, the power supply means 5 supplies power to the motor 1 by driving a switching means (not shown).

By the way, it is generally known that the stability of a feedback system can be improved by limiting its DC gain and bandwidth. In the control device of Fig. 24, a ripple on the motor current is reduced at the sacrifice of the accuracy and response speed of the control.

As described above, the DC gain and the bandwidth are greatly limited in the conventional device.

The limitation of the DC gain means that the error between the target current signal and the motor current detection signal is not much amplified, which may result in a failure of controlling the motor current to the target current, i.e., a steady-state deviation being left.

The limitation of the bandwidth causes an insufficient response speed, which may make the control incapable of following a steering operation, that is, may result in insufficient assistance to a steering operation.

## SUMMARY OF THE INVENTION

The present invention has been made to solve the above problems, and has a first object of preventing a motor from generating vibration or noise without sacrificing control performance.

A second object of the invention is to prevent a motor from generating vibration or noise by using a simple configuration.

A third object of the invention is to prevent a motor from generating vibration or noise while improving the stability of control.

A fourth object of the invention is to prevent a motor from generating vibration or noise, and to assure a stable operation even where noise is included in a detection output of a current flowing through the motor.

A fifth object of the invention is to prevent a motor from generating vibration or noise even when an error amplifying means is saturated in a control scheme in which power supplied to the motor is controlled based on a pulse width modulation signal.

A sixth object of the invention is to prevent a motor from generating vibration or noise even in the occurrence of a variation in a power supply voltage in a control scheme in which power supplied to the motor is controlled based on a pulse width modulation signal.

A seventh object of the invention is to prevent a motor from generating vibration or noise by preventing the frequency reduction of a pulse width modulation signal.

In a control device for a power steering motor according to the invention, a variation slowing means having a time constant that is approximately equal to or smaller than an electrical time constant of the motor is provided between a target current setting means and an error amplifying means. The variation slowing means slows the variation of a signal representing a target current to thereby smooth a current flowing through the motor.

The variation slowing means may be constituted of a microcomputer (program), which calculates an average of a previous target current and a present target current, and outputs the average as the target current.

According to another aspect of the invention, a phase advancing means for advancing the phase of a predetermined frequency band portion of a detection output of a current detecting means is provided between the current detecting means and the error amplifying means.

The phase advancing means may have a damping means, which reduces noise superimposed on the detection output of the current detecting means to thereby prevent the motor current from being disturbed in response to the noise.

According to another aspect of the invention, a level converting means is provided which converts the level of an output voltage of the error amplifying means so that the converted voltage is within a predetermined range that is determined based on the amplitude of a carrier wave. Since the level-converted voltage is supplied from the level converting means to a pulse width modulation means, the output of the error amplifying means is not applied to the pulse width modulation means as it is even when the error amplifying means if saturated.

The level converting means may have a limiting means for limiting the output voltage of the error amplifying means so that the converted voltage does not exceed a predetermined voltage that is determined based on a variation amount of a power supply voltage for the error amplifying means. The limiting means prevents the level-converted voltage from varying in response to a variation of the power supply voltage.

The level converting means may convert the output voltage of the error amplifying means so that the converted voltage is within a range covered by a voltage range of the amplitude of the carrier wave. This prevents a frequency reduction of a signal that is output from the pulse width modulation means.

BRIEF DESCRIPTION OF THE DRAWINGS

Fig. 1 shows a configuration of a first embodiment of the present invention;
Fig. 2 includes an equivalent circuit of a general separately excited DC motor and diagrams showing its characteristics;
Fig. 3 are waveform diagrams showing voltages at several points in the first embodiment of the invention in the case where no variation slowing means is provided;
Fig. 4 are waveform diagrams showing voltages at several points in the first embodiment;

Fig. 5 shows a variation of target current values;
Fig. 6 is a frequency response of an open-loop transfer function;
Fig. 7 is a frequency response of a closed-loop transfer function;
Fig. 8 shows how a motor current responds to varying target current values;
Fig. 9 shows a frequency response of an open-loop transfer function with an improvement attained by a phase advancing means;
Fig. 10 shows how a motor current responds to varying target current values when improved by the phase advancing means;
Fig. 11 shows a configuration of a phase advancing means having a damping means according to the invention;
Fig. 12 compares DC gain frequency responses of a conventional device and the first embodiment;
Fig. 13 shows a configuration of an example of the variation slowing means of the invention;
Fig. 14 shows a configuration of a second embodiment of the invention, which employs a microcomputer;
Fig. 15 is a flowchart showing an operation of the variation slowing means that is implemented by a program;
Fig. 16 shows a configuration in which the invention is applied to a PWM control type device;
Fig. 17 shows a flowchart showing a motor current control operation;
Fig. 18 is a diagram showing output voltage ranges of several parts of the device;
Fig. 19 is a diagram showing an operation of a level converting means;
Fig. 20 shows a configuration of a level converting means having a limiting means;
Fig. 21 is a diagram showing output voltage ranges of several parts of the device that incorporates the limiting means;
Fig. 22 is a diagram showing an operation when hunting occurs in the drive duty ratio of switching elements;
Fig. 23 is a diagram showing a function of the level converting means according to the invention; and
Fig. 24 shows a configuration of a conventional device.

DESCRIPTION OF THE PREFERRED EMBODIMENTS

Embodiments of the present invention will be hereinafter described with reference to the accompanying drawings.

Embodiment 1

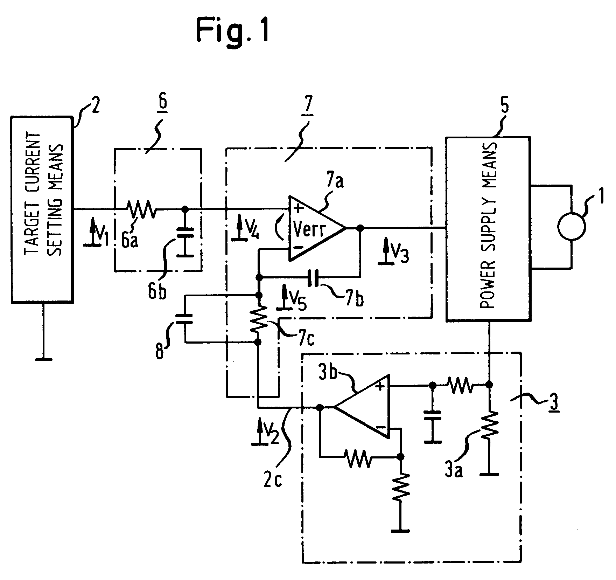

Fig. 1 shows a configuration of a first embodiment of the invention, in which the parts bearing the same reference symbols as in Fig. 24 are the same or corresponding parts. In Fig. 1, a variation slowing means 6 for slowing a variation of an output signal of the target current setting means 2 is a first-order lagging circuit consisting of a resistor 6a and a capacitor 6b. An error amplifying circuit 7 for amplifying a voltage difference between output voltages of the variation slowing means 6 and the current detecting means 3 is an integration circuit consisting of an operational amplifier 7a, a capacitor 7b and a resistor 7c. A capacitor 8 as a phase advancing means is provided in parallel with the resistor 7c.

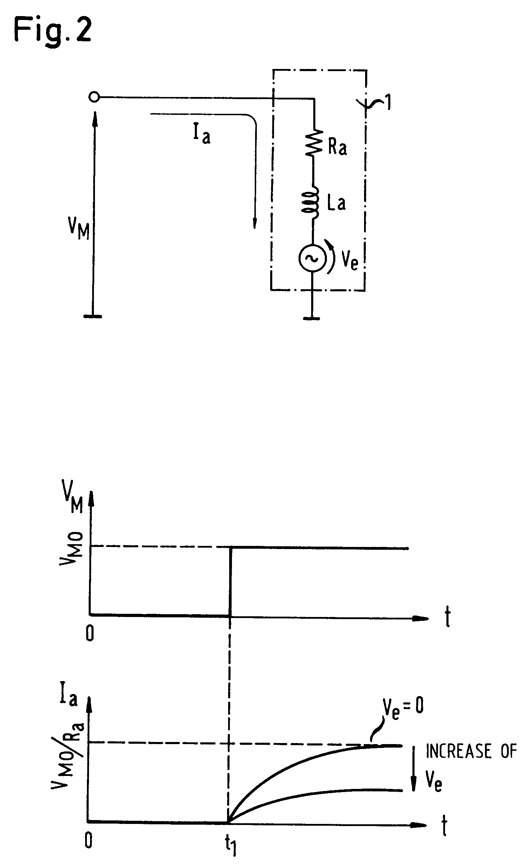

A description will be made of motor characteristics here. Fig. 2 shows an equivalent circuit of an armature of a separately excited DC motor and its characteristics. Ra denotes an armature resistance; La, armature inductance; Ve, motor induced voltage; $V_M$, motor application voltage; and Ia, motor current. When a voltage $V_M$ having a rectangular waveform (see Fig. 2) is applied to the motor whose output shaft is fixed (in this case, the motor induced voltage Ve is 0), the current Ia gradually increases (see Fig. 2) and finally reaches a certain value. This is expressed as

$$Ia = \frac{V_{MO}(1-e^{-\frac{Ra}{La}t})}{Ra}. \qquad (1)$$

As is apparent from this equation, the variation rate of the motor current Ia is limited by an electrical time constant La/Ra; that is, the motor current Ia cannot vary faster than the rate defined by this time constant. When the motor output shaft is not fixed, the motor induced voltage Ve occurs and the variation rate of the motor current Ia is further slowed.

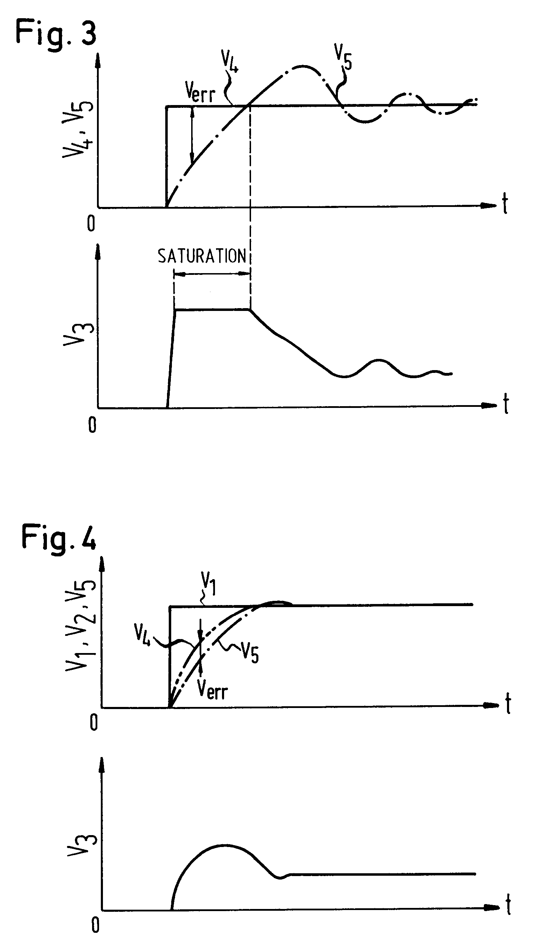

If the variation slowing means 6 were not provided in the control device of Fig. 1, which approximately corresponds to the case where the DC gain and the bandwidth are not limited in the device of Fig. 24, voltages at several points in the device would show characteristics as shown in Fig. 3. The voltage waveforms of Fig. 3 are those obtained when a rectangular input voltage V4 is applied to the positive input terminal of the operational amplifier 7a of the error amplifying means 7. Since, as described above, the motor current Ia cannot vary faster than the rate defined by the electrical time constant of the motor 1, it cannot follow the input voltage V4 being applied to the positive input terminal. Thus, an input voltage V5 at the negative input terminal of the operational amplifier 7a gradually increases as shown in Fig. 3. Since the operational amplifier 7a amplifies an error Verr between the input voltages at the positive and negative input terminals, the operational amplifier 7a (error amplifying means 7) is saturated when the error Verr is large, to output a voltage V3 as shown in Fig. 3. With the saturation of the error amplifying means 7, correct control is in no way obtained. More specifically, an overshoot appears in the motor current Ia as reflected in a voltage V5 shown in Fig. 3. As a result, the motor 1 generates vibration and noise, and is therefore not suitable for actual use.

To avoid the above problem, i.e., to prevent saturation of the error amplifying means 7, in the first embodiment the variation slowing means 6 is provided between the target current setting means 2 and the error amplifying means 7. The time constant of the variation slowing means 6 is determined by the resistor 6a and the capacitor 6b, and is so set as to be approximately equal to or smaller than the electrical time constant of the motor 1.

The operation of the first embodiment will be described by using characteristic diagrams of Fig. 4. A case is considered in which a rectangular output voltage V1 of the target current setting means 2 is applied to the variation slowing means 6. Receiving the output voltage V1 of the target setting means 2, the variation slowing means 6, which has the predetermined time constant, gives a voltage V4 having a waveform as shown in Fig. 4 to the positive input terminal of the operational amplifier 7a. Since the output voltage V4 of the variation slowing means 6 varies with a time constant approximately equal to the electrical time constant of the motor 1, the motor 1 can properly respond to the target current instruction to produce a motor current detection output V5 as shown in Fig. 4. The error amplifying means 7 amplifies an error Verr between the output voltage V4 of the variation slowing means 6 and the motor current detection output V5. Since the error Verr is so small that the error amplifying means 7 is not saturated.

Therefore, no overshoot appears in the motor current Ia. Thus, the first embodiment can prevent the motor 1 from generating vibration or noise without limiting the DC gain nor the bandwidth.

Now, a description will be made of the phase advancing means 8 (not described above).

In general, the current detecting means 3 has a lag in its detection, which lag reduces the phase margin of the current control system to thereby lower the stability of control.

Further, where a microcomputer is used in the target current setting means 2, it is desired that the period $T_S$ of setting the target current value be as short as possible (usually, 0.5-2 msec).

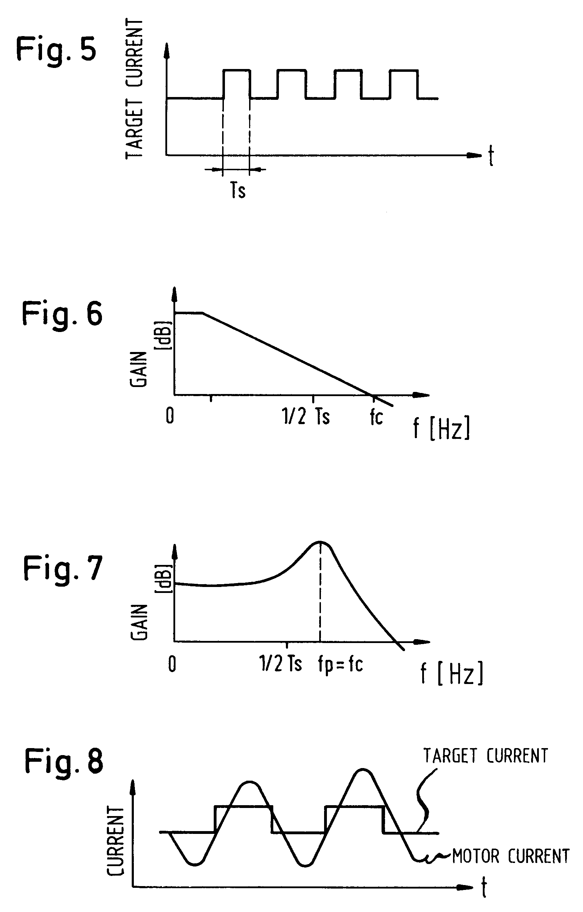

However, since target current values as output from a D/A converter are discrete, if noise is included in sensor information used to calculate the target current values, resulting target current values as output from the target current setting means 2 have a variation whose period is $2T_S$ in the shortest case (see Fig. 5).

On the other hand, an integration type controller is used in the error amplifying means 7, and open-loop and closed-loop transfer functions of the current control system has frequency responses as shown in Figs. 6 and 7, respectively.

A consideration will be made of a case where the period $T_S$ is shortened to improve the feeling of a steering operation. In this case, $1/2T_S$ indicated in Fig. 6 becomes closer to a cutting frequency fc. Since the open-loop gain is very small in the vicinity of the cutting frequency fc (see Fig. 6), the cutting frequency fc is approximately equal to a closed-loop resonance frequency fp.

If a variation occurs in the target current values in the above case, overshoots and undershoots appear in the motor current in response to the variation of the target current values (see Fig. 8). Since the frequency of a ripple on the motor current is in an audible range in this case, uncomfortable noise sound is generated.

To solve this problem, in the first embodiment, the capacitor 8 is provided in parallel with the resistor 7c. The capacitor 8 serves to supply high-frequency components of the detection output V2 of the current detecting means 3 without passing those component through the resistor 7c. The capacitor 8 compensates for a lag in the detection output V2 of the current detecting means 3, to increase the phase margin of the current control system, to thereby improve the stability of control.

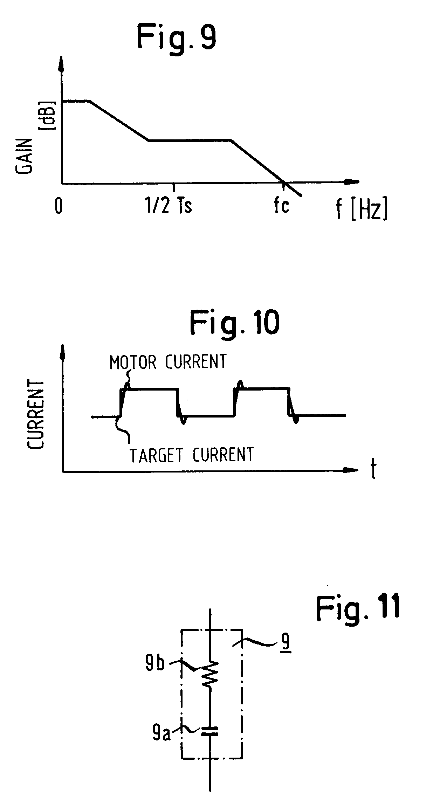

Further, the capacitor 8 serves to move the cutting frequency fc and the resonance frequency fp away from $1/2T_S$ by advancing the phase in a prescribed frequency range (preferably $1/2T_S$ to $1/T_S$) as shown in Fig. 9. This prevents the motor current from largely varying in response to a variation of the target current values, so that the motor current becomes stable as shown in Fig. 10.

In order to further improve the stability of control, the phase advancing means 8 may be replaced by another phase advancing means 9 (see Fig. 11), which is a series connection of a capacitor 9a and a resistor 9b as a damping means. The phase advancing circuit 9 is provided in parallel with the resistor 7c in Fig. 1.

In general, noise is included in the detection output V2 of the current detecting means 3. Therefore, in the case of the phase advancing means 8 constituted only of a capacitor, which has an excessively large gain in a high-frequency range, when the detection output V2 has a small S/N (signal/noise) ratio, the motor current Ia may vary in response to noise included in the detection output V2.

To solve this problem, the phase advancing means 9 employs the resistor 9b which limits the gain so that it does not become excessively large in a high-frequency range. As a result, the response speed with respect to noise (high-frequency components) can be reduced to prevent the motor current Ia from varying in response to noise.

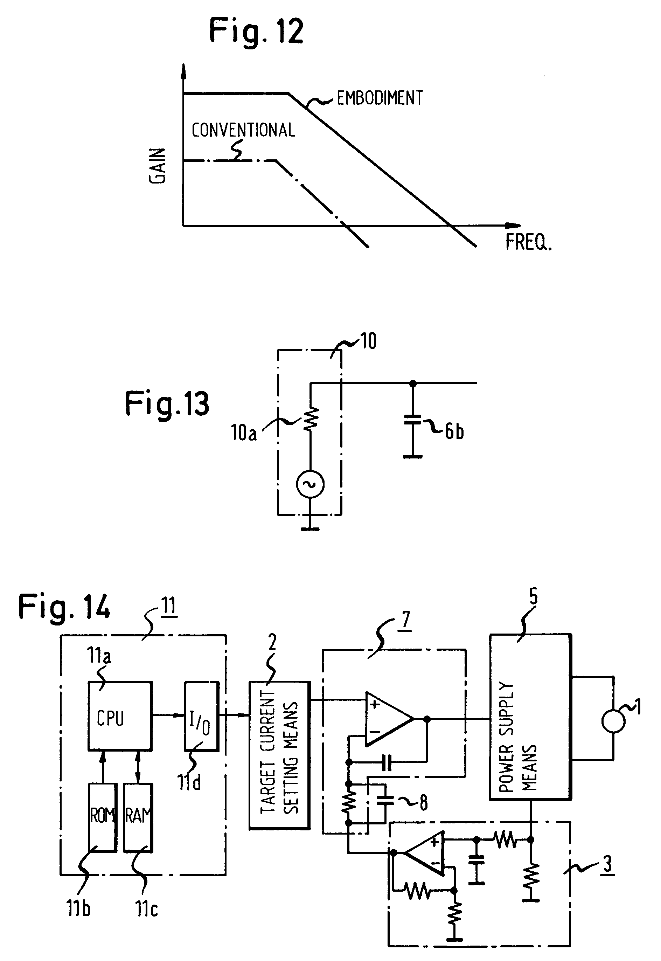

For reference, DC gain frequency responses of the conventional device and the first embodiment are compared in Fig. 12.

In the first embodiment, the time constant of the variation slowing means 6 is set approximately equal to the electrical time constant of the motor 1, because while the saturation of the error amplifying means 7 can be prevented more positively as the time constant becomes larger, an excessively large time constant lowers the response speed with respect to the output voltage of the target current setting means 2.

Although in the first embodiment the variation slowing means 6 is a first-order lagging circuit, it may have any form as long as it can slow a variation of the output voltage of the target current setting means 2.

In the first embodiment, the variation slowing means 6 is the first-order lagging circuit consisting of the resistor 6a and the capacitor 6b. However, where the output resistance of the target current setting means 2 is known as exemplified by a D/A converter using a ladder resistor (see Fig. 13), the variation slowing means 6 may be constituted of an output resistance 10a and the capacitor 6b. This configuration has an advantage of a reduced number of parts.

Embodiment 2

In the first embodiment described above, the variation slowing means 6 is implemented by hardware. Where the control device is of a type that uses a microcomputer as shown in Fig. 14, the variation slowing means 6 may be implemented by software.

Fig. 14 shows a configuration of a control device for a power steering motor which device uses a microcomputer. In Fig. 14, the parts that are the same as or equivalent to those already described above are given the same reference numerals. A microcomputer 11 consists of a CPU 11a, a ROM 11b for storing programs, a RAM 11c for temporarily storing data etc., and an I/O port 11d for outputting calculated results.

The operation of the second embodiment will be described below. Since the basic operation of the second embodiment is the same as that of the first embodiment, a description therefor is omitted here, and only a description as to how to implement the variation slowing means 6 by a program will be made.

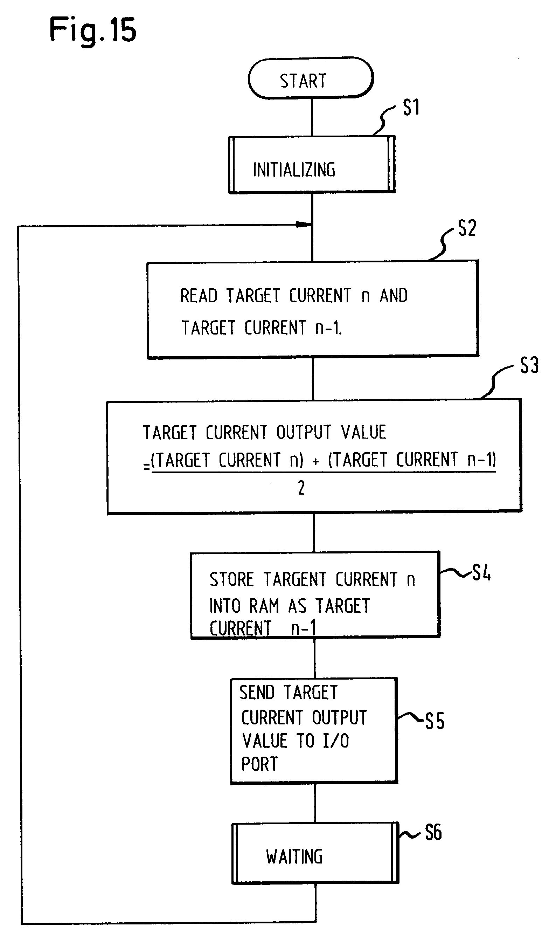

Fig. 15 is a flowchart showing how the variation slowing means 6 operates on the microcomputer 11.

In step S1, the I/O port 11d etc. are initialized. After the execution of step S1, the process goes to step S2, where a present target current n and a preceding target current n-1 that was previously output from the I/O port 11d are read. The target currents are calculated by separate processing based on information, such as a steering torque, obtained by sensors and the like (not shown). In step S3, an average of the present target current n and the preceding target current n-1, i.e., a moving average is calculated. In step S4, the target current n obtained in step S2 is written to the RAM 11c as the target current n-1 to prepare for the next calculation. In step S5, the target current output value obtained in step S3 is output from the I/O port 11d and given to the target current setting means 2. The target current setting means 2 operates in the same manner as in the first embodiment based on the signal thus received. Step S6 is a waiting step to make the processing time of steps S2-S6 constant.

The second embodiment can simplify the configuration of the control device because the variation slowing means 6 is eliminated from the hardware.

Since the target current output value does not vary abruptly because it is obtained through the taking of a moving average.

Embodiment 3

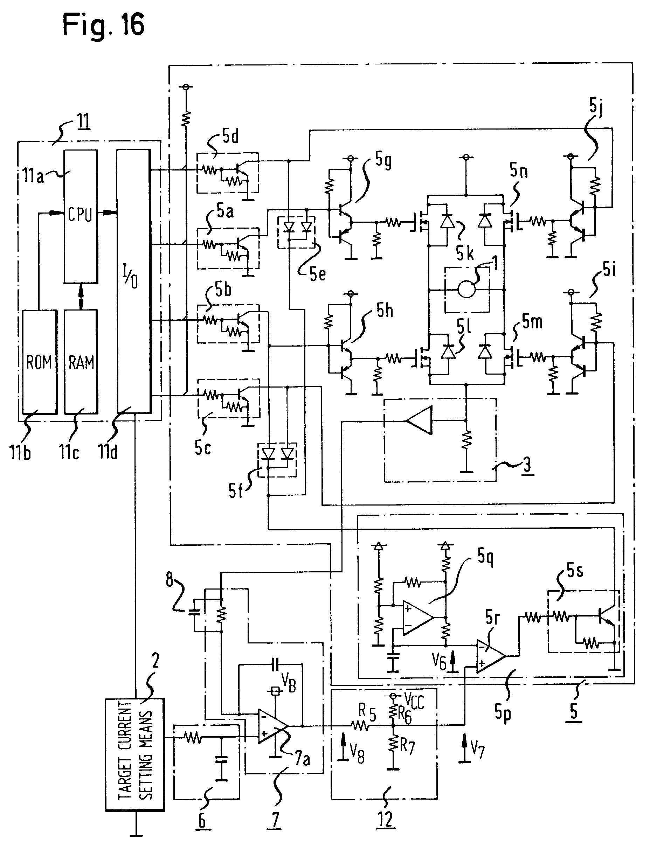

A third embodiment is directed to a case where the power supply means 5 is driven based on a pulse width modulation (PWM) signal (PWM control). Fig. 16 shows a configuration of the third embodiment. In Fig. 16, the parts the same as or equivalent to those already described above are given the same reference numerals.

The bases of transistors 5a-5d are connected to the microcomputer 11, and their conduction/non-conduction states are controlled by the microcomputer 11. The collectors of the microcomputer 11 are connected to respective input terminals of gate drivers 5g-5j, and also connected to a pulse width modulation means (described later) through diodes 5e and 5f. Outputs of the gate drivers 5g-5j are supplied to power MOSFETs 5k-5n that constitute an H-type bridge circuit. The power MOSFETs 5k-5n constitute a switching means. Reference symbol 5p represents a carrier wave generating means and a pulse width modulation means. The carrier wave generating means is constituted of a triangular wave oscillation circuit 5q for generating a triangular wave as a carrier wave having a predetermined frequency and amplitude. The pulse width modulation means consists of a comparator 5r for comparing the voltage obtained by level-converting an output voltage of the error amplifying means 7 by a level converting means 12 with the triangular wave thus generated, and a transistor 5s whose collector is connected to the cathodes of the diodes 5e and 5f and which generates a PWM signal based on an output of the comparator 5r.

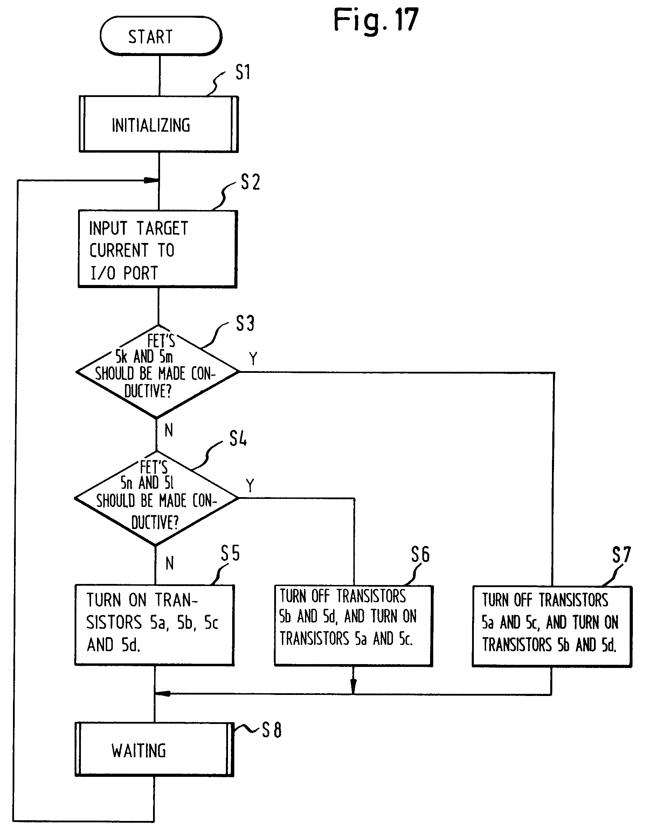

The third embodiment operates as follows. Fig. 17 is a flowchart stored in the microcomputer 11. In step S1, the I/O port 11d is initialized. In step S2, the separately calculated target current is input to the target current setting means 2 through the I/O port 11d. In steps S3 and S4, it is judged whether a current should flow through the motor 1 in the positive or negative direction, or should not flow through the motor 1. Depending on the judgments in steps S3 and S4, the process goes to step S5, S6 or S7. In steps S5-S7, the transistors 5a-5d are selectively driven. Step S8 is a waiting step to make the processing time of steps S2-S8 constant.

For example, to provide a current that flows through the motor 1 in the left-to-right direction in Fig. 16, the power MOSFETs 5k and 5m should be made conductive. Therefore, the judgment is step S3 is YES, and the process goes to step S7, where the transistors 5a and 5c are turned off and the transistors 5b and 5d are turned on. When the transistors 5a and 5c are in an off state, the power MOSFETs 5k and 5m are driven by the gate drivers 5g and 5i, respectively.

On the other hand, the power MOSFETs 5l and 5n are rendered non-conductive because the lower transistor (pnp-type) in Fig. 16 of each of the gate drivers 5h and 5j is conductive to supply a low-level signal to the corresponding power MOSFET.

In the above manner, the conduction of the power MOSFETs 5k and 5l determine the current flowing direction in the motor 1. On the other hand, the amount of the current is determined by the pulse width modulation means 5p.

Since the PWM control is well known, it will be described here only briefly. The triangular wave generating circuit 5q continuously outputs a triangular wave having a predetermined frequency and amplitude, which is input to the negative input terminal of the comparator 5r. On the other hand, the output of the error amplifying means 7 is input to the positive input terminal of the comparator 5r through the level converting means 12. Comparing those signals, the comparator 5r supplies a rectangular pulse signal to the transistor 5s. Assume here that the transistor 5s is turned on. In this case, since the inputs of all the gate drivers 5g-5j are at the low level, the lower transistors (pnp-type) in Fig. 16 are turned on to turn off all the power MOSFETs 5k-5n. Conversely, if the transistor 5s is turned off, the conduction/non-conduction states of the power MOSFETs 5k-5n are determined by the states of the transistors 5a-5d, respectively.

Thus, the amount of the current flowing through the motor 1 is controlled by the rectangular pulse signal that is produced in accordance with the comparison result of the comparator 5r.

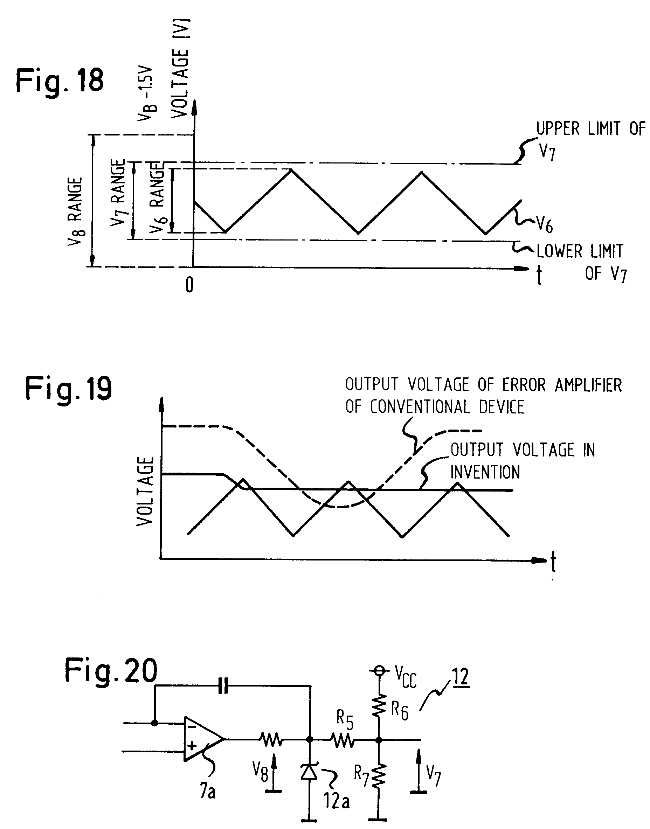

Next, a description will be made of the level converting means 12 with reference to Fig. 18. In Fig. 18, V6 denotes an output voltage of the triangular wave generating circuit 5q. On the other hand, V8 and V7 represent an output voltage of the error amplifying means 7 and a voltage obtained by level-converting the output voltage V8 of the error amplifying means 7, respectively.

As shown in Fig. 18, the range of the output voltage V8 of the error amplifying means 7 is wider than the range of the triangular wave V6. Therefore, when, for instance, an overshoot occurs in the motor current Ia, the operational amplifier 7a is saturated and the output voltage V8 of the error amplifying means 7 largely deviates from the voltage range of the amplitude of the triangular wave V6.

This situation is shown in Fig. 19. In Fig. 19, the output voltage V8 of the error amplifying means 7 is indicated by a dashed line and the level-converted voltage V7 is indicated by a solid line. As seen from Fig. 19, when the error amplifying means 7 is saturated, its output voltage V8 largely deviates from the range of the triangular wave V6. Therefore, to duty-control the motor current, the voltage V8 indicated by the dashed line needs to be reduced so as to come into the voltage range of the amplitude of the triangular wave V6, which will cause a delay in the control.

This will greatly deteriorate the control performance, possibly causing a ripple on the motor current. This situation may occur not only when the operational amplifier 7a is saturated, but also when it is intended to have a large or very small current flow through the motor 1.

To solve the above problem, in the third embodiment, the level converting circuit 12 is provided which converts the level of the output voltage V8 of the error amplifying means 7 (dashed line in Fig. 19) to that of the voltage V7 (solid line). The level converting means 12 performs the voltage level conversion according to the following equation:

$$V7 = \frac{R5 \cdot R7 \cdot Vcc + R6 \cdot R7 \cdot V8}{R5 \cdot R6 + R6 \cdot R7 + R7 \cdot R5} \qquad (2)$$

where Vcc is a predetermined voltage and R5-R7 are predetermined resistances.

The operational amplifier 7a operates on a one-sided constant voltage $V_B$ (see Fig. 16), and its output voltage range is in the range of 0 V to $(V_B - 1.5)$ V. Equally, the range of the output voltage V8 of the error amplifying means 7 is given by

$$0 \text{ V} \leq V8 \leq (V_B - 1.5) \text{ V} \qquad (3)$$

The intended operation can be obtained by setting the resistances R5-R7 according to Equations (2) and (3) so that the range of the output voltage V7 of the level converting means 12 becomes slightly wider than the voltage range of the amplitude of the triangular wave V6 as shown in Fig. 18.

Embodiment 4

In the above-described third embodiment, it is assumed that the power supply voltage $V_B$ for the operational amplifier 7a is a constant voltage, and that the range of the output voltage V8 of the error amplifying means 7 is uniquely determined. However, the voltage $V_B$ may be supplied from a battery, in which case the voltage $V_B$ is not necessary constant. When the battery voltage $V_B$ varies, the range of the output voltage V8 of the error amplifying means 7 varies accordingly.

To avoid this problem, a Zener diode 12a as a limiting means is provided in a fourth embodiment. Fig. 20 shows a configuration of a level converting means 12 in the fourth embodiment.

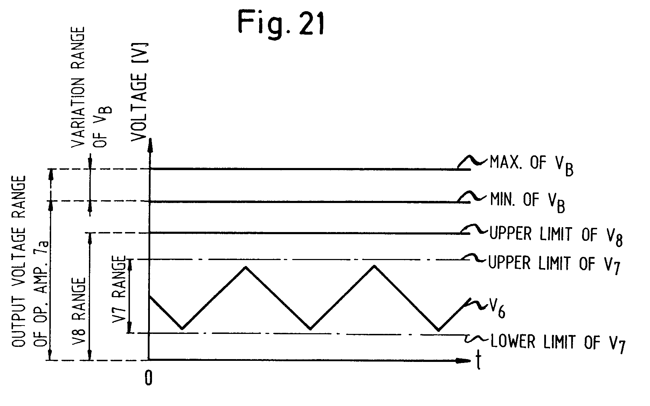

Fig. 21 shows an operation of the level converting means 12. As shown in Fig. 21, the range of the output voltage of the operational amplifier 7a varies in response to the variation of the battery voltage $V_B$, and the range of the output voltage V8 of the error amplifying means 7 changes accordingly. However, since the output voltage V8 is clipped at a prescribed Zener potential by the Zener diode 12a, the variation of the battery voltage $V_B$ has no influence on a voltage level converting section consisting of the resistors R5-R7.

As a result, even when the battery voltage $V_B$ varies, it can be prevented that the motor current la has a ripple.

Embodiment 5

Where the motor current la is PWM-controlled, a current ripple due to PWM driving of the switching elements may cause vibration or noise. Considering this fact, the frequency of the triangular wave V6 is usually set higher than the audio frequency range. However, when hunting occurs in the drive duty ratio of the switching elements between 100% and a value smaller than 100% or between 0% and a value larger than 0%, there arises an operation equivalent to the operation that occurs when the triangular wave frequency is reduced, thus causing the above-described problem.

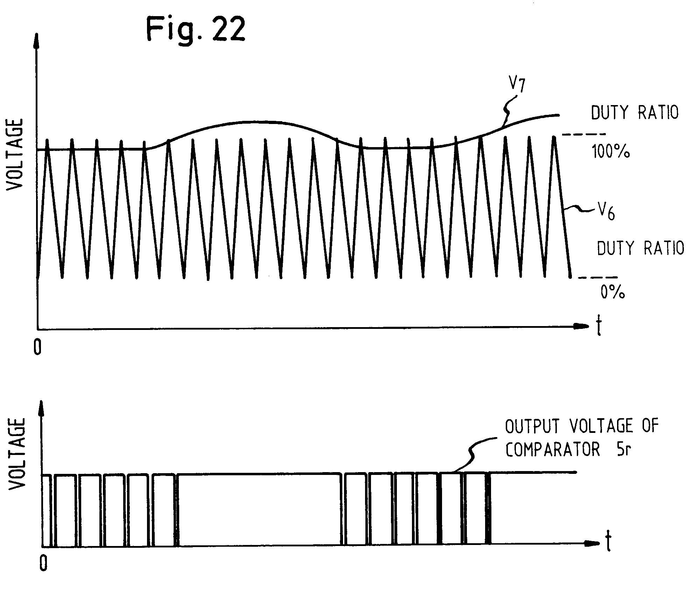

This will be explained using an example of Fig. 22, in which hunting occurs in the drive duty ratio of the switching elements between 100% and a value smaller than 100%. As shown in Fig. 22, when the drive duty ratio exceeds 100%, the output voltage of the comparator 5r is fixed at the high level, so that the average frequency of the output voltage of the comparator 5r becomes smaller than the frequency of the triangular wave V6.

A fifth embodiment is intended to solve the above problem. More specifically, the level converting means 12 shifts the output voltage V8 of the error amplifying means 7 so that the resulting voltage range is made approximately equal to or covered by the voltage range of the amplitude of the triangular wave V6.

This is illustrated in Fig. 23. With this measure, since the output voltage V7 of the level converting means 12 does not deviate from the voltage range of the amplitude of the triangular wave V6, there does not occur the case of Fig. 22 in which the frequency of the output voltage of the comparator 5r is smaller than the frequency of the triangular wave V6.

Where it is prohibited that the drive duty ratio of the switching elements becomes 0%, in which case a current always flows through the motor 1, care should be taken so that clipping is not effected at an excessively large drive duty ratio but at a ratio small enough to avoid generation of torque on the output shaft of the motor 1.

With the above described constitution, the invention provides the following advantages.

According to the invention, the variation of the output of the target current setting means is slowed by the variation slowing means, and the time constant of the variation slowing means is set approximately equal to or smaller than the electrical time constant of the motor. Therefore, the motor can be prevented from generating vibration or noise.

By using a microcomputer to form the variation slowing means, a simple configuration can prevent the motor from generating vibration or noise.

By providing the phase advancing means, the motor can be prevented from generating vibration or noise while the stability of control is improved.

By providing the phase advancing means having the damping means, the motor can be prevented from generating vibration or noise while the stability of control is improved. In addition, a stable operation is assured even if noise is included in a detection output of a current flowing through the motor.

By providing the level converting means between the error amplifying means and the pulse width modulation means in the device of the type in which the power supplied to the motor is controlled based on the pulse width modulation signal, the motor can be prevented from generating vibration or noise even when the error amplifying means is saturated.

By providing the level converting means having the limiting means in the device of the type in which the power supplied to the motor is controlled based on the pulse width modulation signal, the motor can be prevented from generating vibration or noise even when a variation occurs in a battery voltage.

By constituting the level converting means so as to shift the range of the output voltage of the error amplifying means so that it is covered by the range of the carrier wave voltage, the frequency reduction of the pulse width modulation signal can be avoided to thereby prevent the motor from generating vibration or noise.

**Claims**

1. A control device of a power steering motor (1) that assists a steering operation which control device comprises means (2) for setting a target current that is to flow through the motor (1), means (3) for detecting a current flowing through the motor (1), means (7) for amplifying an error between a signal corresponding to the target current and a detection output of the current detecting means (3); and means (5) for supplying power to the motor (1) based on an output of the error amplifying means (7), characterized by:
   means (6) having a time constant that is substantially equal to or smaller than an electrical time constant of the motor (1), for slowing a variation of an output of the target current setting means (2) to produce the signal corresponding to the target current.

2. The control device of claim 1, characterized in that the variation slowing means (6) includes a microcomputer (11) for calculating an average of a previous target current and a present target current, and outputting the average as the signal corresponding to the target current.

3. A control device of a power steering motor (1) that assists a steering operation which control device comprises means (2) for setting a target current that is to flow through the motor (1), means (3) for detecting a current flowing through the motor (1), means (7) for amplifying an error between an output of the target current setting means (2) and a signal corresponding to a detection output of the current detecting means (3); and means (5) for supplying power to the motor (1) based on an output of the error amplifying means (7), characterized by:
   means (9) for advancing a phase of a predetermined frequency band portion of the output of the current detecting means (3) to produce the signal corresponding to the output of the current detecting means (3).

4. The control device of claim 3, characterized in that the phase advancing means (9) includes damping means.

5. A control device of a power steering motor (1) that assists a steering operation which control device comprises means (2) for setting a target current that is to flow through the motor (1), means (3) for detecting a current flowing through the motor (1), means (7) for amplifying an error between an output of the target current setting means (2) and a detection output of the current detecting means (3); and means (5) for supplying power to the motor (1) based on an output of the error amplifying means (7), the power supplying means (5) comprising switching means (5k-5n) for supplying the power to the motor (1), means (5q) for generating a carrier wave having a predetermined frequency and amplitude, and means (5r,5s) for generating a pulse width modulation signal based on a result of comparison between a signal corresponding to an output of the error amplifying means (7) and an output of the carrier wave generating means (5q) and for driving the switching means (5k-5n) based on the pulse width modulation signal, said control device characterized by:
   means (12) for converting a level of an output voltage of the error amplifying means (7) so that the converted voltage is within a predetermined range that is determined based on an amplitude of the carrier wave, and outputting the converted voltage as the signal corresponding to the output of the error amplifying means (7).

6. The control device of claim 5, characterized in that the level converting means (12) includes means (12a) for limiting the output voltage of the error amplifying means (7) so that the converted voltage does not exceed a predetermined voltage that is determined based on a variation amount of a power supply voltage for the error amplifying means (7).

7. The control device of claim 5, characterized in that the level converting means (12) converts the output voltage of the error amplifying means (7) so that the converted voltage is within a range covered by a voltage range of the amplitude of the carrier wave.

**Patentansprüche**

1. Steuervorrichtung eines Servolenkmotors (1), der einen Lenkvorgang unterstützt, welche Steuervorrichtung Einrichtungen (2) zum Einstellen eines Sollstroms umfaßt, der durch den Motor (1) fließen soll, Einrichtungen (3) zum Erfassen eines durch den Motor (1) fließenden Stroms, Einrichtungen (7) zum Verstärken eines Fehlers zwischen einem Signal entsprechend dem Sollstrom und einer Erfassungsausgabe der Stromerfassungseinrichtung (3); und Einrichtungen (5) zum Liefern von Leistung an den Motor (1) basierend auf einer Ausgabe der fehlerverstärkenden Einrichtung (7), gekennzeichnet durch:
Einrichtungen (6) mit einer Zeitkonstante, die im wesentlichen kleiner gleich einer elektrischen Zeitkonstante des Motors (1) ist, um eine Variation einer Ausgabe der Sollstromeinstelleinrichtung (2) zu verlangsamen, um das Signal entsprechend dem Sollstrom zu erzeugen.

2. Steuervorrichtung nach Anspruch 1, dadurch gekennzeichnet, daß die Variationsverlangsamungseinrichtung (6) einen Mikrocomputer (11) zum Berechnen eines Mittelwertes eines vorangehenden Sollstroms und eines gegenwärtigen Sollstroms, und Ausgeben des Mittelwertes als das Signal entsprechend dem Sollstrom, einschließt.

3. Steuervorrichtung eines Servolenkmotors (1), der einen Lenkvorgang unterstützt, welche Steuervorrichtung Einrichtungen (2) zum Einstellen eines Sollstroms umfaßt, der durch den Motor (1) fließen soll, Einrichtungen (3) zum Erfassen eines durch den Motor (1) fließenden Stroms, Einrichtungen (7) zum Verstärken eines Fehlers zwischen einer Ausgabe der Sollstromeinstellungseinrichtung (2) und einem Signal entsprechend einer Erfassungsausgabe der Stromerfassungseinrichtung (3); und Einrichtungen (5) zum Liefern von Leistung an den Motor (1) basierend auf einer Ausgabe der fehlerverstärkenden Einrichtung (7), gekennzeichnet durch:
Einrichtungen (9) zum Voreilen einer Phase eines vorbestimmten Frequenzbandabschnittes der Ausgabe der Stromerfassungseinrichtung (3), um das Signal entsprechend der Ausgabe der Stromerfassungseinrichtung (3) zu erzeugen.

4. Steuervorrichtung nach Anspruch 3, dadurch gekennzeichnet, daß die Phasenvoreilungseinrichtung (9) Dämpfungseinrichtungen einschließt.

5. Steuervorrichtung eines Servolenkmotors (1), der einen Lenkvorgang unterstützt, welche Steuervorrichtung Einrichtungen (2) zum Einstellen eines Sollstroms umfaßt, der durch den Motor (1) fließen soll, Einrichtungen (3) zum Erfassen eines durch den Motor (1) fließenden Stroms, Einrichtungen (7) zum Verstärken eines Fehlers zwischen einer Ausgabe der Sollstromeinstelleinrichtung (2) und einer Erfassungsausgabe der Stromerfassungseinrichtung (3); und Einrichtungen (5) zum Liefern von Leistung an den Motor (1) basierend auf einer Ausgabe der fehlerverstärkenden Einrichtung (7), wobei die Leistungsversorgungseinrichtung (5) Schalteinrichtungen (5k-5n) zum Liefern der Leistung an den Motor (1) umfaßt, Einrichtungen (5q) zum Erzeugen einer Trägerwelle mit einer vorbestimmten Frequenz und Amplitude, und Einrichtungen (5r, 5s) zum Erzeugen eines Impulsbreitenmodulationssignals basierend auf einem Ergebnis eines Vergleichs zwischen einem Signal entsprechend einer Ausgabe der fehlerverstärkenden Einrichtung (7) und einer Ausgabe der Trägerwellenerzeugungseinrichtung (5q), und zum Ansteuern der Schalteinrichtungen (5k-5n) basierend auf dem Impulsbreitenmodulationssignal, wobei die Steuervorrichtung gekennzeichnet ist durch:
Einrichtungen (12) zum Umwandeln eines Pegels einer Ausgangsspannung der fehlerverstärkenden Einrichtung (7), so daß die umgewandelte Spannung innerhalb eines vorbestimmten Bereiches ist, der basierend auf einer Amplitude der Trägerwelle bestimmt wird, und Ausgeben der umgewandelten Spannung als das Signal entsprechend der Ausgabe der fehlerverstärkenden Einrichtung (7).

6. Steuervorrichtung nach Anspruch 5, dadurch gekennzeichnet, daß die Pegelumwandlungseinrichtung (12) Einrichtungen (12a) zum Begrenzen der Ausgangsspannung der fehlerverstärkenden Einrichtung (7) einschließt, so daß die umgewandelte Spannung eine vorbestimmte Spannung nicht übersteigt, die basierend auf einer Variationsgröße einer Versorgungsspannung für die fehlerverstärkende Einrichtung (7) bestimmt wird.

7. Steuervorrichtung nach Anspruch 5, dadurch gekennzeichnet, daß die Pegelumwandlungseinrichtung (12) die Ausgangsspannung der fehlerverstärkenden Einrichtung (7) umwandelt, so daß die umgewandelte Spannung innerhalb eines Bereiches ist, der von einem Spannungsbereich der Amplitude der Trägerwelle abgedeckt wird.

**Revendications**

1. Dispositif de commande d'un moteur de direction assistée (1) qui aide à une opération de direction, lequel dispositif de commande comporte des moyens (2) pour établir un courant cible qui doit circuler à travers le moteur (1), des moyens (3) pour détecter un courant circulant à travers le moteur (1), des moyens (7) pour amplifier une erreur existant entre un signal correspondant au courant cible et un signal de sortie de détection des moyens de détection de courant (3) ; et des moyens (5) pour alimenter électriquement le moteur (1) sur la base d'un signal de sortie des moyens d'amplification d'erreur (7), caractérise en ce qu'il comporte

des moyens (6) ayant une constante de temps qui est à peu près égale ou inférieure à une constante de temps électrique du moteur (1), pour ralentir la variation d'un signal de sortie des moyens d'établissement de courant cible (2) pour fournir le signal correspondant au courant cible.

2. Dispositif de commande selon la revendication 1, caractérisé en ce que les moyens de ralentissement de variation (6) comportent un micro-ordinateur (11) pour calculer la moyenne d'un courant cible précédent et d'un courant cible présent, et émettre la moyenne en tant que signal correspondant au courant cible.

3. Dispositif de commande d'un moteur de direction assistée (1) qui aide à une opération de direction, lequel dispositif de commande comporte des moyens (2) pour établir un courant cible qui doit circuler à travers le moteur (1), des moyens (3) pour détecter un courant circulent à travers le moteur (1), des moyens (7) pour amplifier une erreur entre un signal de sortie des moyens d'établissement de courant cible (2) et un signal correspondant à une sortie de détection des moyens de détection de courant (3) ; et des moyens (5) pour alimenter électriquement le moteur (1) sur la base d'un signal de sortie des moyens d'amplification d'erreur (7), caractérisé en ce qu'il comporte

des moyens (9) pour avancer une phase d'une partie de bande de fréquences prédéterminée du signal de sortie des moyens de détection de courant (3) pour fournir le signal correspondant à la sortie des moyens de détection de courant (3).

4. Dispositif de commande selon la revendication 3, caractérisé en ce que les moyens d'avancement de phase (9) comportent des moyens d'amortissement.

5. Dispositif de commande d'un moteur de direction assistée (1) qui aide à une opération de direction, lequel dispositif de commande comporte des moyens (2) pour établir un courant cible qui doit circuler à travers le moteur (1), des moyens (3) pour détecter un courant circulant à travers le moteur (1), des moyens (7) pour amplifier une erreur existant entre un signal de sortie des moyens d'établissement de courant cible (2) et un signal de sortie de détection des moyens de détection de courant (3) ; et des moyens (5) pour alimenter électriquement le moteur (1) sur la base d'un signal de sortie des moyens d'amplification d'erreur (7), les moyens d'alimentation électrique (5) comportant des moyens de commutation (5k à 5n) pour alimenter en électricité le moteur (1) , des moyens (5q) pour engendrer une onde porteuse ayant une amplitude et une fréquence prédéterminées, et des moyens (5r, 5s) pour engendrer un signal de modulation de largeur d'impulsion basé sur le résultat de la comparaison entre un signal correspondant à une sortie des moyens d'amplification d'erreur (7) et un signal de sortie des moyens engendrant une onde porteuse (5q) et pour entraîner les moyens de commutation (5k à 5n) sur la base du signal de modulation de largeur d'impulsion, ledit dispositif de commande étant caractérisé en ce qu'il comporte

des moyens (12) pour convertir le niveau d'une tension de sortie des moyens d'amplification d'erreur (7) de sorte que la tension convertie soit dans une plage prédéterminée qui est déterminée sur la base de l'amplitude de l'onde porteuse, et pour émettre la tension convertie en tant que signal correspondant à la sortie des moyens d'amplification d'erreur (7).

6. Dispositif de commande selon la revendication 5, caractérisé en ce que les moyens de conversion de niveau (12) comportent des moyens (12a) pour limiter la tension de sortie des moyens d'amplification d'erreur (7) de sorte que la tension convertie ne dépasse pas une tension prédéterminée qui est déterminée sur la base d'une quantité de variation de la tension d'alimentation des moyens d'amplification d'erreur (7).

7. Dispositif de commande selon la revendication 5, caractérisé en ce que les moyens de conversion de niveau (12) convertissent la tension de sortie des moyens d'amplification d'erreur (7) de sorte que la tension convertie est située dans une plage recouverte par une plage de tension de l'amplitude de l'onde porteuse.

# Fig.1

# Fig. 2

Fig. 3

SATURATION

Fig. 4

Fig. 5

Fig. 6

Fig. 7

Fig. 8

## Fig. 9

GAIN [dB]

0    1/2 Ts    fc    f [Hz]

## Fig. 10

CURRENT

MOTOR CURRENT

TARGET CURRENT

t

## Fig. 11

9

9b

9a

# Fig. 12

# Fig.13

# Fig. 14

# Fig.15

```
        ┌─────────────┐
        │    START    │
        └─────────────┘
               │
               │            S1
        ┌─────────────┐
        │ INITIALIZING│
        └─────────────┘
               │
               │                       S2
    ┌──────────────────────────────────┐
    │  READ TARGET CURRENT n AND        │
    │  TARGET CURRENT n-1.              │
    └──────────────────────────────────┘
               │
               │                       S3
    ┌──────────────────────────────────┐
    │  TARGET CURRENT OUTPUT VALUE      │
    │  =(TARGET CURRENT n) + (TARGET CURRENT n-1) │
    │              2                    │
    └──────────────────────────────────┘
               │
               │              S4
    ┌──────────────────────┐
    │ STORE TARGENT CURRENT n│
    │ INTO RAM AS TARGET     │
    │ CURRENT  n-1           │
    └──────────────────────┘
               │
               │         S5
    ┌──────────────────┐
    │ SEND TARGET      │
    │ CURRENT OUTPUT   │
    │ VALUE TO I/O     │
    │ PORT             │
    └──────────────────┘
               │
               │         S6
    ┌──────────────────┐
    │    WAITING        │
    └──────────────────┘
```

$$\text{TARGET CURRENT OUTPUT VALUE} = \frac{(\text{TARGET CURRENT } n) + (\text{TARGET CURRENT } n-1)}{2}$$

Fig. 16

# Fig. 17

```
        ( START )
            │
            ▼  ⌇ S1
    ┌───────────────┐
    │  INITIALIZING │
    └───────────────┘
            │
            ▼  ⌇ S2
    ┌───────────────┐
    │ INPUT TARGET  │
    │ CURRENT TO    │
    │ I/O PORT      │
    └───────────────┘
            │
            ▼      ⌇ S3
        ╱ FET'S ╲
       ╱ 5k AND 5m ╲        Y
      ╱ SHOULD BE MADE CON- ╲──────────────────────────────┐
       ╲  DUCTIVE?  ╱                                        │
        ╲        ╱                                           │
            │ N      ⌇ S4                                    │
        ╱ FET'S ╲                                            │
       ╱ 5n AND 5l ╲       Y                                 │
      ╱ SHOULD BE MADE CON- ╲──────────────┐                │
       ╲  DUCTIVE?  ╱                        │                │
        ╲        ╱                           │                │
            │ N       ⌇ S5          ⌇ S6     │      ⌇ S7     │
    ┌───────────────┐  ┌──────────────────┐  ┌──────────────────┐
    │ TURN ON TRAN- │  │ TURN OFF TRANSISTORS │ │ TURN OFF TRANSISTORS │
    │ SISTORS 5a, 5b, 5c│ │ 5b AND 5d, AND TURN ON │ │ 5a AND 5c, AND TURN ON │
    │ AND 5d.       │  │ TRANSISTORS 5a AND 5c. │ │ TRANSISTORS 5b AND 5d. │
    └───────────────┘  └──────────────────┘  └──────────────────┘
            │                   │                      │
            ◄───────────────────┴──────────────────────┘
            │
            ▼  ⌇ S8
    ┌───────────────┐
    │    WAITING    │
    └───────────────┘
            │
            └──────────► (back to S2)
```

**Fig. 18**

**Fig. 19**

**Fig. 20**

# Fig. 21

VARIATION RANGE OF $V_B$

VOLTAGE [V]

OUTPUT VOLTAGE RANGE OF OP. AMP. 7a

V8 RANGE

V7 RANGE

MAX. OF $V_B$

MIN. OF $V_B$

UPPER LIMIT OF $V_8$

UPPER LIMIT OF $V_7$

$V_6$

LOWER LIMIT OF $V_7$

0

t

Fig. 22

# Fig. 23

VOLTAGE [V]

UPPER LIMIT OF $V_7$

$V_6$ RANGE

$|V_7$ RANGE$|$

$V_6$

LOWER LIMIT OF $V_7$

0

t

# Fig. 24 PRIOR ART

$C_2$

2

TARGET CURRENT SETTING MEANS

$R_4$

$R_3$

4a

$R_1$

$R_2$

$C_1$

5

POWER SUPPLY MEANS

1

3b

3a

3